# EUROPEAN PATENT APPLICATION

(11) **EP 1 655 062 A1**
(43) Date of publication of application: **10.05.2006**
(21) Application number: 04700007.0
(22) Date of filing: 30.04.2004
(51) Int. Cl.: A63H 5/00, A63H 17/34

(54) **SOUND APPARATUS**

(30) Priority: 21.05.2003 JP 2003143072
(71) Applicant: Konami Corporation, Chiyoda-ku, Tokyo 100-6330 (JP)
(72) Inventor: YAMAGUCHI, Takashi, Chiyoda-ku, Tokyo 1006330 (JP); KAJIHARA, Yasuhiro, Chiyoda-ku, Tokyo 1006330 (JP)
(74) Representative: Haley, Stephen
(86) International application number: PCT/JP2004/006307
(87) International publication number: WO 2004/112928

(57) **Abstract**

Disclosed is a sound apparatus having an object of reproducing an effect sound having a wide variation. An expansion unit (10) has a control circuit (61), an audio circuit (62), and a speaker (63). The audio circuit (62) has a first sound source (SG1)-a fifth sound source (SG5). The control circuit (61) controls the first to fifth (SG1-SG5) sound sources according to a change of speed information. When the speed information greatly changes over a speed range corresponding to a gear, processing is executed to interrupt the reproduction of an acceleration sound or a deceleration sound and to reproduce it from the beginning of it according to the number of times that a boundary between speed ranges is encompassed.

## Description

### Technical Field

The present invention relates to a sound apparatus used in a remote-controlled toy.

### Background Art

There are have been known many remote-controlled toys each of which has a drive unit to drive based on a code signal transmitted from a controller. The code signal includes manipulation information of the drive unit, and a driving state of the drive unit such as a traveling direction and a traveling speed can be adjusted by the information.

### Disclosure of Invention

However, in conventional remote-controlled toys, there is a lack of excitation because a game is played without sound. In remote-controlled toys in which information for controlling a sound is created in addition to the manipulation information and a sound apparatus is contolled using the information, an constitution of a controller is made complex. Further, it is preferable that the sound apparatus has a simple constitution.

Accordingly, it is a solving problem of the present invention to provide a sound apparatus that can reproduce an effect sound abundant in variety by a simple constitution. The present invention will be explained below.

A sound apparatus according to the present invention is used in a remote-controlled toy having a controller for outputting manipulation information according to a content manipulated by a user and a toy driven based on the manipulation information, and the above problem is solved by providing the sound apparatus with a reproduction device for reproducing a plurality of types of sound data according to a driving state of the toy and a control device for analyzing a change of the driving state of the toy based on a change of the manipulation information and controlling the reproduction device such that sound data can be created according to the change of the driving state based on a result of the analysis.

According to the invention, the change of the driving state of the toy is analyzed based on the change of the manipulation information, and sound data according to the change of the driving state of the toy is created based on the result of the analysis. Accordingly, the controller need not create information for reproducing an effect sound in addition to the manipulation information. Further, even if types of sound data are limited in the sound apparatus, since various types of sound data can be appropriately combined in conformity with the change of the driving state of the toy, it is possible to reproduce an effect sound abundant in variety by a simple constitution. Because of that, the realism of a game can be enhanced. Note that the reproduction device may be any device as long as it can reproduce sound data and includes a sound source made by hardware, a sound source made by software, a PCM sound source, an FM sound source, and the like. Further, the manipulation information may be input to the sound apparatus at a predetermined cycle.

It is preferable that the control device detect the change of the manipulation information by comparing past manipulation information with present manipulation information, and when the amount of change of the manipulation information is within a predetermined range, it is preferable that the control device maintains a controlled state of the reproduction device to create the sound data. When the manipulation information does not almost change, the driving state also does not change. Accordingly, it is more preferable to reproduce the same sound data than to change a type of sound data to be reproduced.

The manipulation information includes speed information to express a speed, the reproduction device can reproduce first sound data to express an acceleration sound and a second sound data to express a deceleration sound, and the control device detects a change of the speed information obtained by comparing past speed information with present speed information as the change of the manipulation information, and when the present speed information is larger than the past speed information, the control device preferably controls the reproduction device such that it reproduces the first sound data, and when the present speed information is less than the past speed information, the control device preferably controls the reproduction device such that it reproduces the second sound data. In this case, since the acceleration sound and the deceleration sound are reproduced in correspondence to the change of the speed information, it is possible to reproduce a more real effect sound.

When the control device detects that a boundary between predetermined speed ranges is encompassed while the past speed information changes to the present speed information, the control device preferably controls the reproduction device such that it interrupts the reproduction of the first sound data or the second sound data and preferably reproduces the first sound data or the second sound data from the beginning of it. In this case, a relation between a plurality of gears and speeds is previously determined, and a change of the speed information that encompasses the boundary between the speed ranges is detected, the reproduction of the acceleration sound and the deceleration sound can be interrupted and they can be reproduced from the beginning of them. With the above operation, an effect sound resulting from gear changes such as shift-up and shift-down operations can be reproduced by the acceleration sound and the deceleration sound without specially providing a reproduction device for gear change.

It is preferable that a plurality of speed ranges to be composed of the predetermined speed ranges are set within a range that can be covered by the speed information and that the control device detect a number of times that a boundary between the predetermined speed ranges is encompassed while the past speed information changes to the present speed information and repeat processing for controlling the reproduction device such that it interrupts the reproduction of the first sound data or the second sound data and reproduce the first sound data or the second sound data from the beginning of it according to the detected number of times. With the above operation, an effect sound corresponding to the shift-up and shift-down operations executed the plurality of times can be simply reproduced.

It is preferable that the reproduction device can reproduce third sound data to express a high-speed traveling sound and fourth sound data to express a low-speed traveling sound and that the control device control the reproduction device such that it reproduces the third sound data after the first sound data has been reproduced as well as control the reproduction device such that it reproduces the fourth sound data after the second sound data has been reproduced. Since a speed is increased after acceleration and the speed is decreased after deceleration, an effect sound can be created in correspondence to a change of the speed, thereby the realism of a game can be more enhanced.

It is preferable that the reproduction device can reproduce fifth sound data to express a stop state sound, and when the present speed information indicates the stop state of the toy and that the control device control the reproduction device such that it reproduces the fifth sound data. It is possible to reproduce, for example, an idling sound as the stop state sound.

It is preferable that the sound apparatus described above include an output device for outputting an audio signal based on the sound data and a speaker driven by the audio signal. The above constitution allows a reproduced sound to be released.

### Brief Description of the Drawings

FIG. 1 is a perspective view showing an outside constitution of a remote-controlled toy according to a first embodiment;
FIG. 2 is a view showing an example of a data structure of transmission data according to the first embodiment;
FIG. 3 is a side elevational view showing an expansion unit according to the first embodiment and the portion of an output terminal of a controller;
FIG. 4 is a block diagram showing an electric constitution of the controller according to the first embodiment;
FIG. 5 is a block diagram showing a circuit constitutionment of the expansion unit according to the first embodiment;
FIG. 6 is an explanatory view showing a relation between a speed range and a gear according to the first embodiment;
FIG. 7 is a flowchart showing a flow of processing executed by a control circuit of the expansion unit;
FIG. 8 is an explanatory view of a first specific example;
FIG. 9 is an explanatory view of a second specific example;
FIG. 10 is an explanatory view of a third specific example;
FIG. 11 is an explanatory view of a fourth specific example;
FIG. 12 is an explanatory view of a fifth specific example; and
FIG. 13 is block diagram showing a circuit constitutionment of an expansion unit according to a second embodiment.

### Best Mode for Carrying out the Invention

### 1. First embodiment

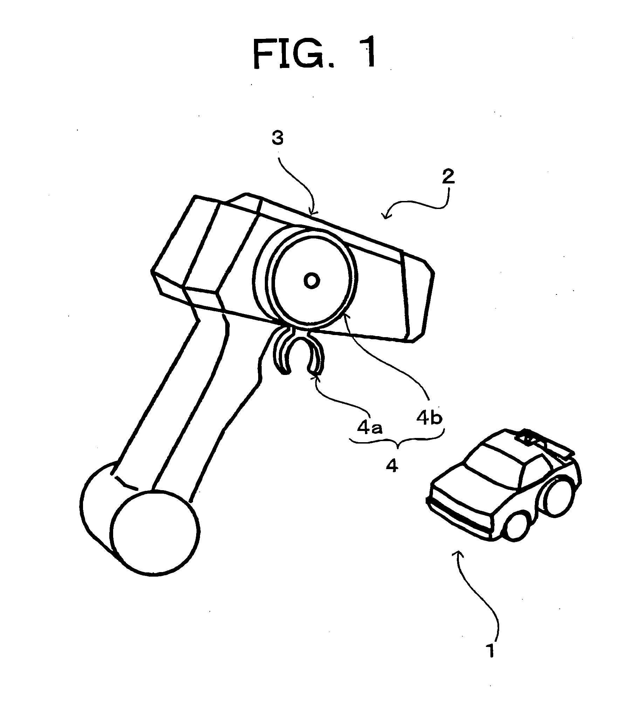

FIG. 1 shows an embodiment of a remote-controlled toy using a sound apparatus according to the present invention. A vehicle 1 is remotely controlled by a controller 2. Thevehicle 1 has an R motor for driving right wheels and an L motor for driving left wheels. The number of revolution of these motors is controlled by a code signal transmitted from the controller 2.

The controller 2 includes an input unit 4 such as a throttle trigger 4a, a steering wheel 4b, and the like. A user drives the vehicle 1 by manipulating the input unit 4. The throttle trigger 4a has the similst function to the function of an accelerator of the vehicle 1. When the throttle trigger 4a is pulled to a grip side, an accelerator depressed state is achieved and the vehicle 1 is moved, and when the throttle trigger 4a is released, an accelerator released state is achieved and the vehicle 1 is stopped. The steering wheel 4b has the similar function to the function of a steering wheel of the vehicle 1. The vehicle 1 turns to the right and to the left by manipulating the steering wheel 4b.

The controller 2 has a transmitter 3 for transmitting a code signal for indicating a movement of the vehicle 1 and an output terminal 50 capable of outputting the code signal (not shown). Infaraed rays are used for transmitting data from the controller 2 to the vehicle 1.

When a plurality of users each having a set of the vehicle 1 and the controller 2 gather and enjoy a race and the like, the vehicle 1 of a user must be controlled so that it is distinguished from the vehicle 1 of other user. For this purpose, an ID code is allocated to each set of the vehicle 1 and the controller 2. Respective ID codes are set such that they can be uniquely identified from the other ID codes. Each controller 2 includes its ID code in the code signal transmitted therefrom. The vehicle 1 identifies the code signal, data of which includes the same ID code as that of the vehicle 1, as a code signal transmitted to itself.

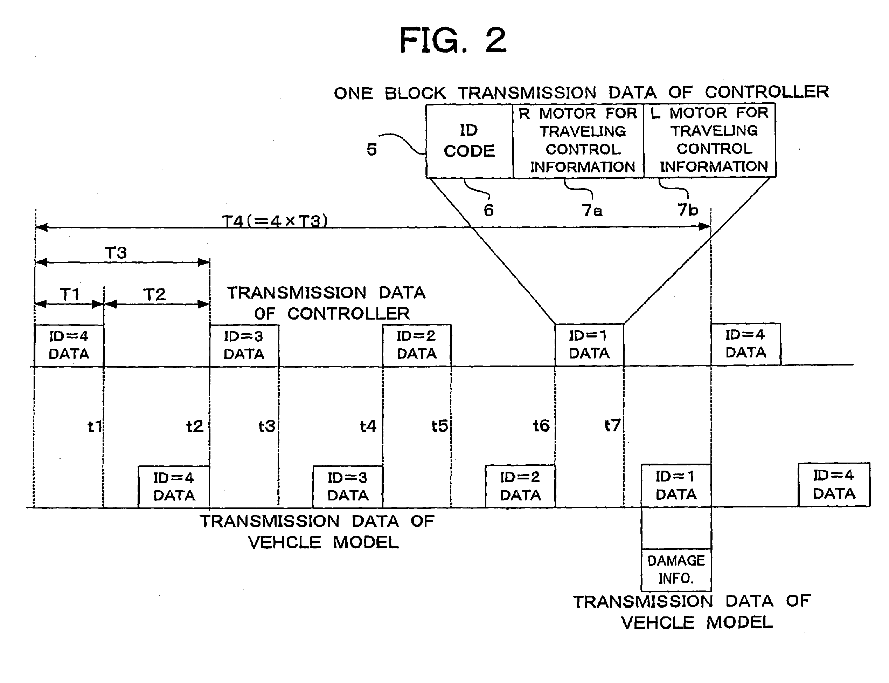

FIG. 2 shows transmission data 5 (manipulation information) as an example of the code signal transmitted from the controller 2. The transmission data 5 is composed of an ID code 6, R motor for traveling control information 7a and L motor for traveling control information 7b. The ID code 6 is the ID code of the controller 2.

Further, the R motor for traveling control information 7a indicates the number of revolution of the R motor, whereas the L motor for traveling control information 7b indicates the number of revolution of the L motor. When the vehicle 1 is traveled in a linear direction, a value of the R motor for traveling control information 7a almost coincidents with a value of the L motor for traveling control information 7b. When the vehicle 1 is traveled so as to turn to the left, the number of revolution indicated by the R motor for traveling control information 7a is larger than that of the L motor for traveling control information 7b. When the vehicle 1 is traveled so as to turn to the right, the number of revolution indicated by the L motor for traveling control information 7b is larger than that of the Rmotor for traveling control information 7a. Since the R motor for traveling control information 7a and the L motor for traveling control information 7b indicate the number of revolution of motor for traveling mounted on the vehicle 1, the information acts as speed information showing a speed of a vehicle. The information is set according to manipulated states of the throttle trigger 4a and the steering wheel 4b.

To prevent interference of the transmission data 5 having the respective ID codes, the transmission data 5 is transmitted according to a transmission timing allocated to each ID code. The transmission timing is adjusted in the controller 2. In the example shown in FIG. 2, data having each of ID = 1 to 4 are transmitted at a cycle of 4 x T3.

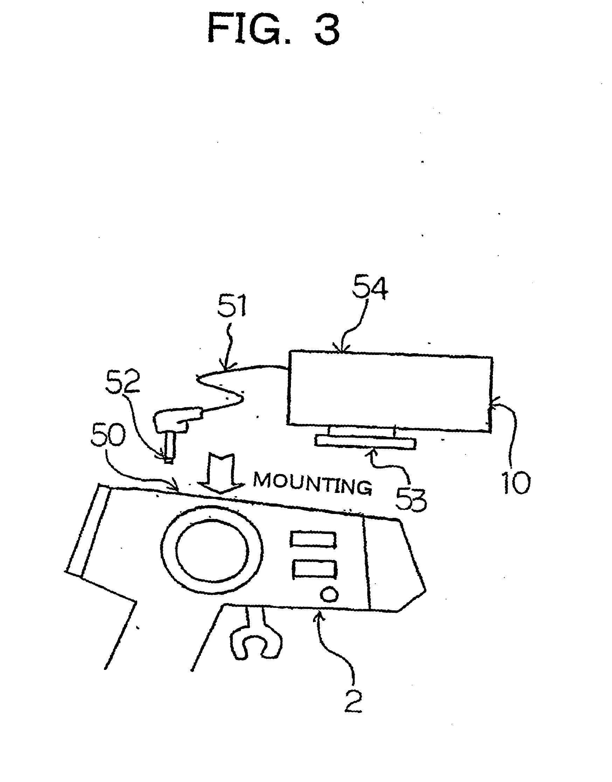

FIG. 3 shows an expansion unit 10 acting as a sound apparatus and the output terminal 50 as a portion on which the expansion unit 10 is mounted. The output terminal 50 is a terminal for electrically outputting the transmission data 5 after it is amplified. The expansion unit 10 has a cable 51 that can be connected to the output terminal 50. The cable 51 has a connection terminal 52 at an end thereof which can be inserted into the output terminal 50 for connection, and the other end thereof is connected to the expansion unit 10. A body of the expansion unit 10 is provided with a stabilizing base 53 so that it can be stably fixed to the controller 2 when it is mounted thereon. Although a constitution of the expansion unit 10 is not limited to the above one, it is preferable that the expansion unit 10 be configured such that it can be stably mounted on the controller 2. It is preferable to set a size and a weight of the expansion unit 10 to such a degree as not to cause troubles when the controller 2 is manipulated after the expansion unit 10 is mounted thereon. Note that the expansion unit 10 may be formed in such a shape that it can be used in other location without mounting on the controller 2. The expansion unit 10 may be provided with an amplifier terminal 54 to output the transmission data 5 after it is amplified.

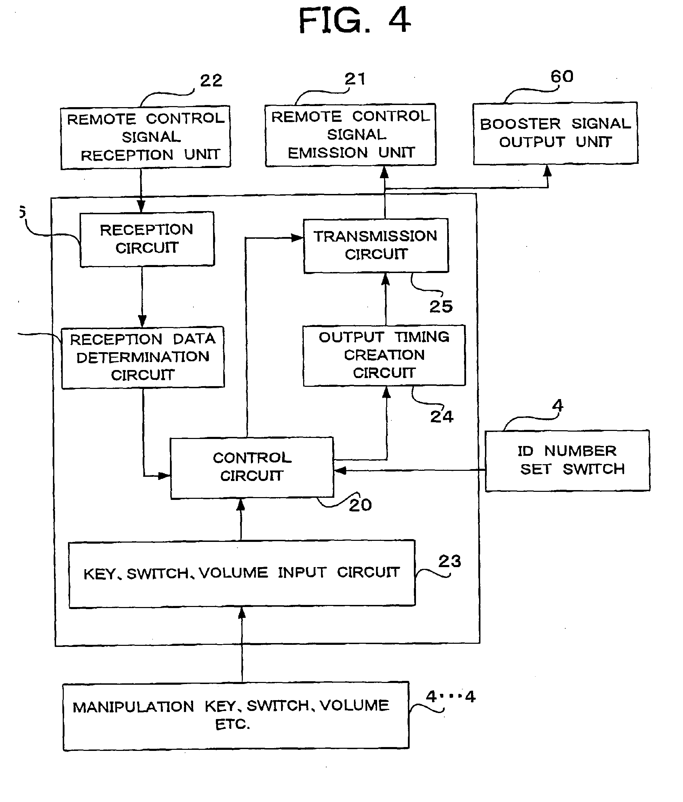

FIG. 4 is a block diagram showing a constitution of the controller 2. An input circuit 23 detects that the input unit 4 is manipulated and supplies a manipulation signal to the control circuit 20 according to a manipulated state of the input unit 4. The control circuit 20 creates the transmission data 5 described above according to the manipulation signal. The R motor for traveling control information 7a and the L motor for traveling control information 7b included in the transmission data 5 are determined according to an amount of displacement of the throttle trigger 4a and a rotational angle of the steering wheel 4b.

The transmission data 5 created by the control circuit 20 is sent to an output timing creation circuit 24, and when it is determined that the transmission timing to send the transmission data 5 comes, the transmission data 5 is sent to a remote control signal emission unit 21 and to a booster signal output unit 60 through a transmission circuit 25. The remote control signal emission unit 21 transmits the transmission data 5 using infrared rays, and the booster signal output unit 60 outputs the transmission data 5 as digital data. A remote control signal reception unit 22 receives the transmission data 5 transmitted from other controller 2. The received transmission data 5 is sent to the control circuit 20 through a reception circuit 26 and a reception data determination circuit 27. The control circuit 20 uses the received data to adjust its timing of transmission.

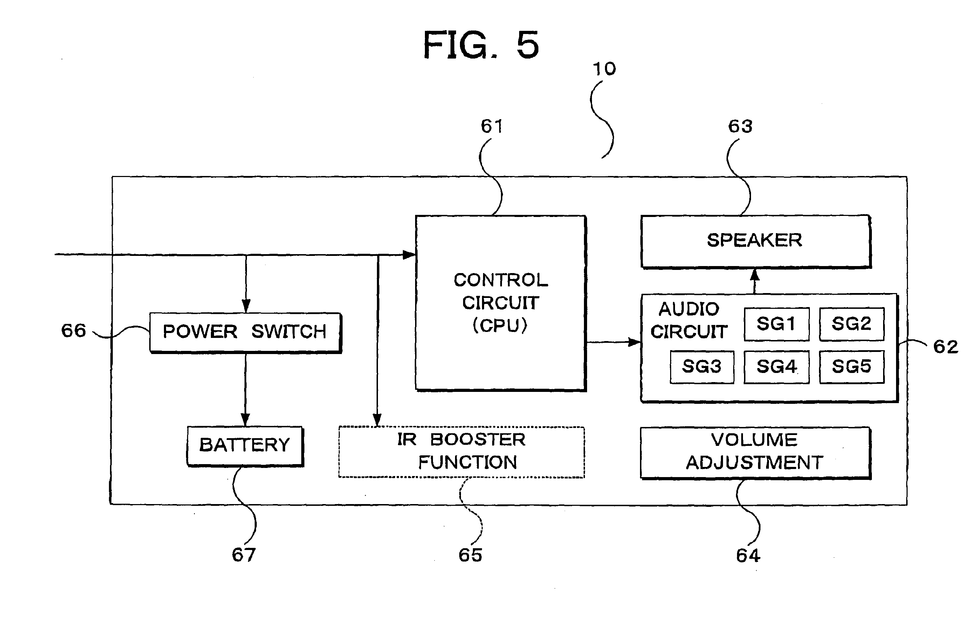

FIG. 5 shows a circuit constitution of the expansion unit 10. The expansion unit 10 is supplied with power from a battery 67, and respective circuits described below will be operated by turning on a power switch 66. The expansion unit 10 includes a control circuit 61, an audio circuit 62, a speaker 63, and a volume adjustment unit 64.

The audio circuit 62 includes first to fifth sound sources SG1-SG5 each composed of a PCM sound source, an FM sound source, and the like, creates reproduced sound data, and D/A converts the reproduced sound data to output an audio signal, under the control of the control circuit 61. The first sound source SG1 outputs sound data D1 expressing an acceleration sound. The acceleration sound is an engine sound which changes from a low sound to a high sound in acceleration. The second sound source SG2 outputs sound data D2 expressing a decelerating sound. The decelerating sound is an engine sound which changes from a high sound to a low sound in deceleration. The third sound source SG3 outputs sound data D3 expressing a high-speed traveling sound. The high-speed traveling sound is a sound created by synthesizing a high-pitched engine sound, a hissing sound, and the like in high-speed traveling. The fourth sound source SG4 outputs sound data D4 expressing a low-speed traveling sound. The low-speed traveling sound is a sound created by synthesizing an engine sound, a hissing sound, and the like in low-speed traveling. The fifth sound source SG5 outputs sound data D5 expressing an idling sound. The idling sound is an engine sound in idling. In the first to fifth sound sources SG1-SG5, whether or not the sound data D1-D5 are to be reproduced, timing at which the sound data D1-D5 are reproduced, whether or not the sound data D1-D5 are to be reproduced repeatedly, and whether or not the reproduction of the sound data D1-D5 is to be interrupted and they are to be reproduced from the beginning thereof, and the like are controlled by a control signal supplied from the control circuit 61. More specifically, the audio circuit 62 acts as a device for reproducing a plurality of types of the sound data D1-D5 according the to a driving state of the vehicle 1, and the control circuit 61 acts as a device for controlling the audio circuit 62 so that the sound data D1-D5 can be created according to a change of the driving state of the vehicle 1.

When the audio signal obtained by D/A convertign the reproduced sound data is supplied to the speaker 63, the speaker 63 releases a reproduced sound. Note that the magnitude of the sound output from the speaker 63 can be adjusted by the volume adjustment unit 64.

The control circuit 61 is composed of a CPU and the like and controls the audio circuit 62. When the transmission data 5 is input to the expansion unit 10 through the cable 51, the control circuit 61 analyzes the transmission data 5. As shown in FIG. 2, the transmission data 5 includes the R motor for traveling control information 7a and the L motor for traveling control information 7b. The information expresses the speed information of the vehicle 1.

The control circuit 61 controls the audio circuit 62 such that a sound can be reproduced according to a driving state of the vehicle based on a change of the speed information. In this case, the first to fifth sound sources SG1-SG5 are controlled based on speed information before the change and speed information after the change.

In general, a vehicle has an engine and gears, and the gears are changed to a first speed, a second speed, a third speed and a fourth speed in response to an increase in speed. Since a load on the engine is varied by a gear change, an engine sound is changed thereby. Accordingly, the control circuit 61 detects the gear change based on past speed information and present speed information and controls the audio circuit 62 so that an engine sound can be reproduced according to the gear change.

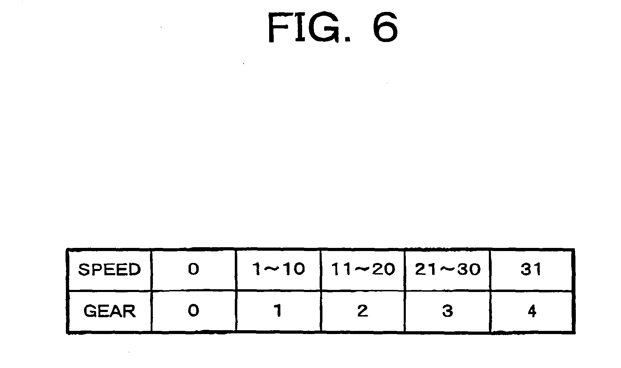

FIG. 6 shows an example of a relation between speed information and a gear. In this example, the speed information is expressed by 32 steps from 0 to 31. The speed information is divided into a plurality of speed ranges, and a gear is allocated to each speed range. However, when the speed information has a value "0", the vehicle 1 is in an idling state, and the gears of the first to fourth speeds are not allocated to the idling state.

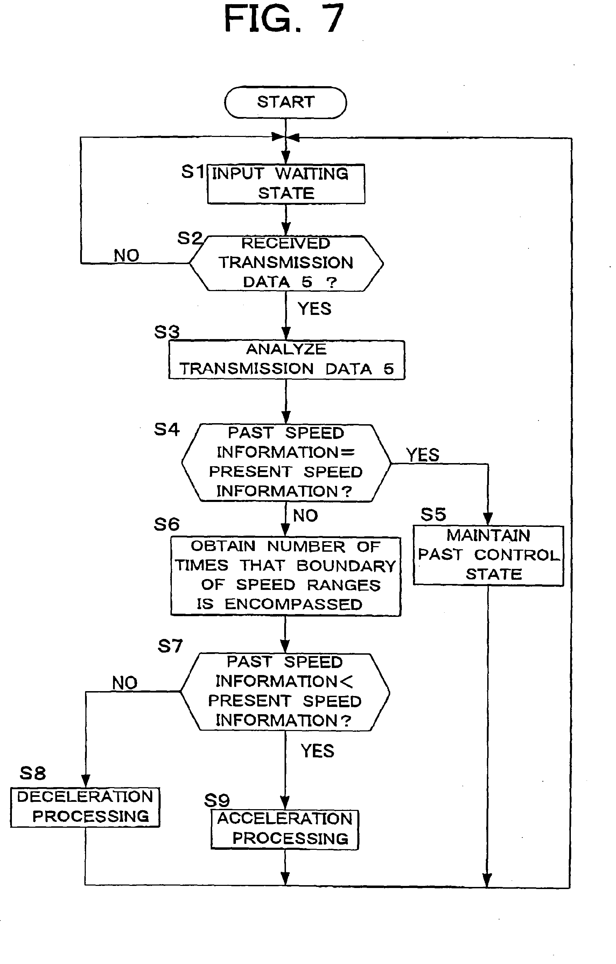

FIG. 7 shows a flow of processing executed by the control circuit 61 of the expansion unit 10. When the power switch 66 is turned on, the control circuit 61 repeats a state of waiting an input of the transmission data 5 (step S1) and a state of determination whether or not the transmission data 5 is received (step S2). When the transmission data 5 is received, the processing goes to a process S3 at which the control circuit 61 analyzes the transmission data 5 and obtains the speed information. Note that an average of the R motor for traveling control information 7a and the L motor for traveling control information 7b may be used as the speed information.

Next, the control circuit 61 compares the past speed information with the present speed information and determines whether or not the former information is in coincidence with the latter information (step S4) . When the former information is in coincidence with the latter information, a past control state is maintained (step S5). When, for example, both the pieces of the past speed information and the present speed information are set to "31" and the high-speed traveling sound is reproduced in the past control state, the reproduction of the high-speed traveling sound is maintained. Note that when the past control state is in coincidence with the present control state, the past control state is maintained in this example. However, the past control state may be maintained when a change of the speed information is detected by comparing the past speed information with the present speed information and an amount of the change is within a predetermined range. In this case, acceleration processing and deceleration processing, both of which will be descrived later, are not executed even if the speed information somewhat changes.

In contrast, when the past speed information is not in coincidence with the present speed information, the number of times that a boundary between speed ranges is encompassed in the period while the past speed information changes to the present speed information (step S6). In this processing, the control circuit 61 creates gear information by determining, for example, which speed range the speed information belongs to and creates the number times that a boundary between speed ranges is encompassed based on a difference between past gear information and present gear information. When, for example, the past speed information is set to "8" and the present invention speed information is set to "31", since the past speed information "8" belongs to a speed range corresponding to the first speed, the gear information thereof is set to "1". In contrast, since the present speed information "31" belongs to a speed range corresponding to the fourth speed, the gear information thereof is "4". As a result, the difference between the gear information is set to "3", and thus the number of times that a boundary between speed ranges is encompassed in the period while the past speed information changes to the present speed information is "three times". Note that when the past speed information is set to "3" and the present speed information is set to "9", since both the pieces of the information belong to the speed range corresponding to the first speed, the number of times a boundary between speed ranges is encompassed is "zero time".

Next, the control circuit 61 determines whether or not the present speed information is larger than the past speed information (step S7). When the present speed information is larger than the past speed information, the acceleration processing is executed (step S8), and when the present speed information is less than the past speed information, the deceleration processing is executed (step S9).

In the acceleration processing, the control circuit 61 controls the audio circuit 62 such that the high-speed traveling sound is reproduced after the acceleration sound is reproduced. Specifically, the control circuit 61 outputs a control signal for causing the first sound source SG1 to reproduce the sound data D1 and then causing the third sound source SG3 to reproduce the sound data D3. Further, the control circuit 61 controls the first sound source SG1 such that the reproduction of the acceleration sound is interrupted and the acceleration sound is reproduced from the beginning according to the number of times that a boundary between speed ranges is encompassed. With the above operation, the acceleration sound is repeated from the beginning each time a gear is shifted up, thereby a more realistic effect sound can be reproduced.

In deceleration processing, the control circuit 61 controls the audio circuit 62 such that the low-speed traveling sound is reproduced after the deceleration sound is reproduced. Specifically, the control circuit 61 outputs a control signal for causing the second sound source SG2 to reproduce the sound data D2 and then causing the fourth sound source SG4 to reproduce the sound data D4. Further, the control circuit 61 controls the second sound source SG2 such that the reproduction of the deceleration sound is interrupted and the deceleration sound is reproduced from the beginning according to the number of times that a boundary between speed ranges is encompassed. With the above operation, the deceleration sound is repeated from the beginning each time a gear is shifted down, thereby a more realistic effect sound such as a sound of engine brake and the like can be reproduced.

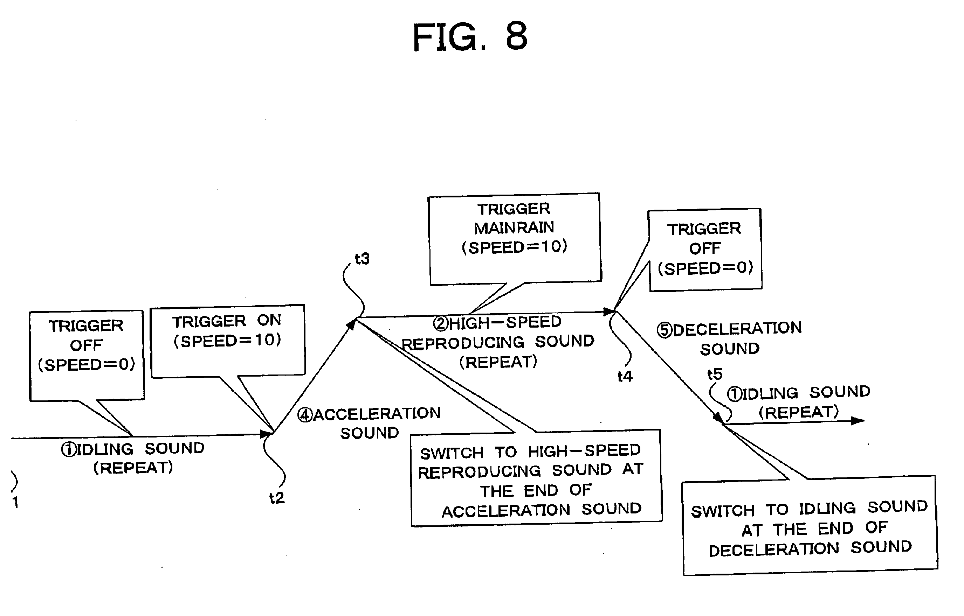

Specific examples will be explained below. FIG. 8 shows an example of acceleration and deceleration when a boundary between speed ranges is not encompassed as a first specific example. First, when the user turns off the throttle trigger 4a from a time t1 to just before a time t2, the speed information is "0". In this case, the control circuit 61 controls the fifth sound source SG5 such that it reproduces the idling sound data D5 repeatedly.

Then, when the user manipulates the throttle trigger 4a and obtains speed information "10" at the time t2, the control circuit 61 controls the audio circuit 62 such that the first sound source SG1 reproduces the acceleration sound data D1 once. Further, the control circuit 61 controls the audio circuit 62 such that the third sound source SG3 reproduces the high-speed reproducing sound data D3 repeatedly at a time t3 at which the reproduction of the acceleration sound is finished.

Next, when the user turns off the throttle trigger 4a at a time t4, the speed information is set to "0". The control circuit 61 controls the audio circuit 62 such that the second sound source SG2 reproduces the deceleration sound data D2 once. Further, the control circuit 61 controls the audio circuit 62 such that the fifth sound source SG5 reproduces the idling sound data D5 repeatedly at a time t5 at which the reproduction of the deceleration sound is finished.

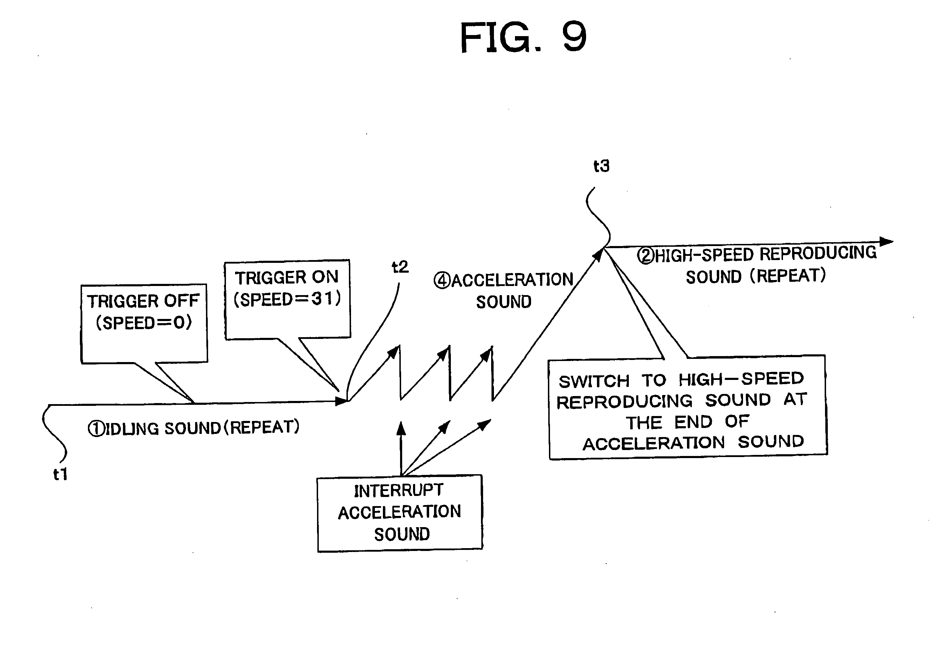

FIG. 9 shows an example of acceleration when a boundary between speedranges is encompassed as a second specific example. In this example, the user manipulates the throttle trigger 4a and changes a turned-off state to a full throttle state at the time t2. At the time, the speed information changes from "0" to "31". The control circuit 61 detects that a boundary between speed ranges has been encompassed four times based on the past speed information "0" and the present speed information "31". Then, the control circuit 61 controls the fourth sound source SG4 such that it reproduces the acceleration sound four times. However, the reproduction of the acceleration sound is interrupted and it is reproduced from the beginning of it in the first three times, whereas it is reproduced from the beginning to the end thereof in the last time. When the reproduction of the final acceleration sound has been completed, the control circuit 61 controls the audio circuit 62 such that the third sound source SG3 reproduces the high-speed reproducing sound data D3 repeatedly. With the above operation, an atmosphere of four times of shift-up operation can be more realistically reproduced.

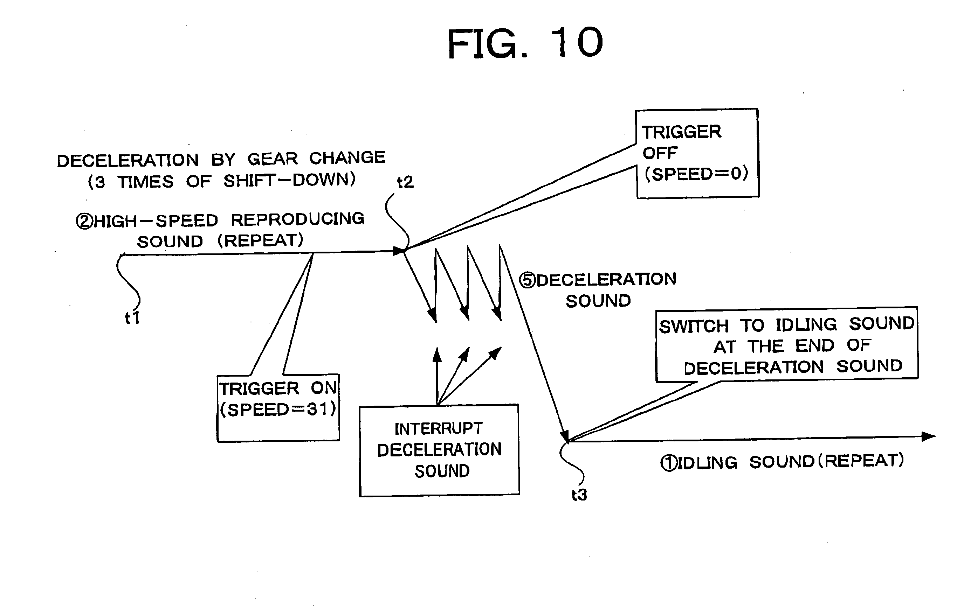

FIG. 10 shows an example of deceleration when a boundary between speed ranges is encompassed as a third example. In this example, the user manipulates the throttle trigger 4a and changes the full throttle state to the turned-off state at the time t2. At the time, the speed information changes from "31" to "0". The control circuit 61 detects that a boundary between speed ranges has been encompassed four times based on the past speed information "31" and the present speed information "0". The control circuit 61 controls the second sound source SG2 such that it reproduces the deceleration sound four times. However, the reproduction of the deceleration sound is interrupted and it is reproduced from the beginning in first three times, whereas it is reproduced from the beginning to the end thereof in a last time. When the reproduction of the final deceleration sound has been completed, the control circuit 61 controls the audio circuit 62 such that the fifth sound source SG5 reproduces the idling sound data D5 repeatedly. With the above operation, an atmosphere of four times of the shif-down operation can be more realistically reproduced.

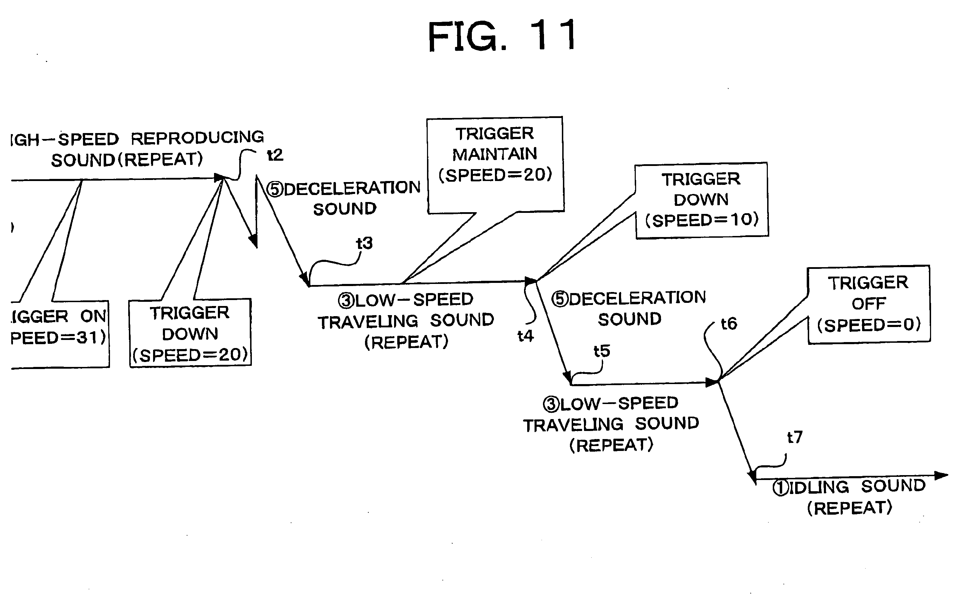

FIG. 11 shows an example of a shift operation from the high-speed traveling sound to the low-speed traveling sound. In this example, the user somewhat moves the throttle trigger 4a back from the full-throttle state at the time t2. At the time, the speed information changes from "31" to "20". The control circuit 61 detects that a boundary between speed ranges has been encompassed once based on the past speed information "31" and the present speed information "20". The control circuit 61 controls the second sound source SG2 such that it reproduces the deceleration sound twice. However, the reproduction of the deceleration sound is interrupted in the first time, and the deceleration sound is reproduced from the beginning to the end thereof in the second time. When the reproduction of the final deceleration sound has been completed at the time t3, the control circuit 61 controls the audio circuit 62 such that the fourth sound source SG4 reproduces the low-speed reproducing sound data D4 repeatedly.

When the user somewhat moves the throttle trigger 4a back and the speed information changes from "20" to "10" at the time t4, the control circuit 61 detects a boundary between speed ranges has been encompassed once based on the past speed information "20" and the present speed information "10". In this case, the control circuit 61 may interrupt the reproduction of the deceleration sound in the first time and may reproduce it from the beginning to the end thereof in the last time similarly to the processing executed from the time t2 to the time t3. Otherwise, the control circuit 61 may controls to reproduce the deceleration sound from the beginning to the end thereof once as shown in the drawing. When the reproduction of the deceleration sound has been completed at the time t5, the control circuit 61 controls the audio circuit 62 such that the fourth sound source SG4 reproduces the low-speed reproducing sound data D4 repeatedly.

When the user changes the throttle trigger 4a to the turned-off state at a time t6, the speed information changes from "10" to "0", The control circuit 61 controls the second sound source SG2 so as to reproduce the deceleration sound once, and when the reproduction of it has been completed, the control circuit 61 controls the audio circuit 62 such that the fifth sound source SG5 reproduces the idling sound data D5 repeatedly.

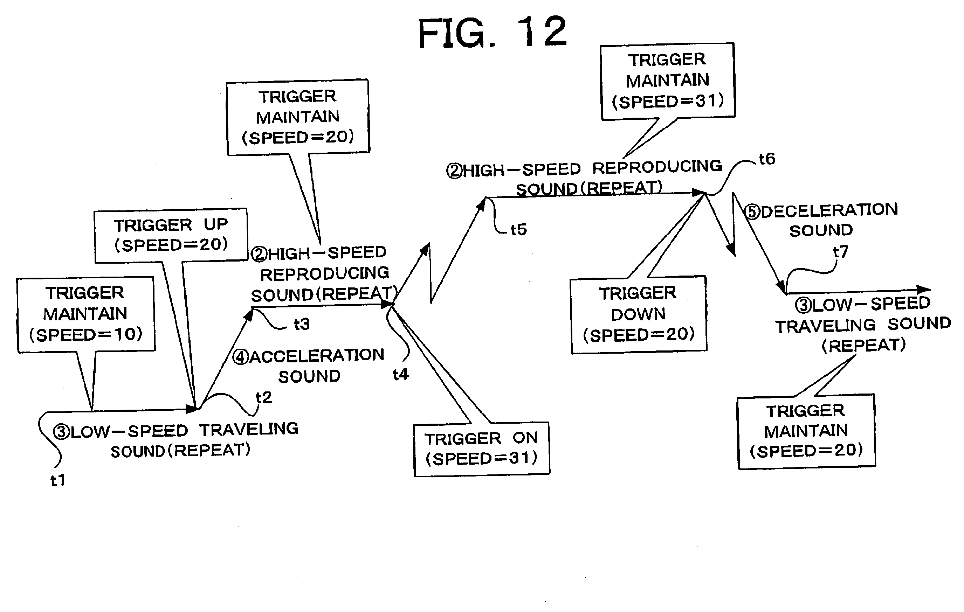

FIG. 12 shows an example that the low-speed traveling sound is shifted to the low-speed traveling sound again through the high-speed traveling sound as a fifth specific example. In this example, the speed information changes from "10" to "20" at the time t2. The control circuit 61 detects the acceleration thereby a boundary of a speed ranges is encompassed onece based on the change of the speed information. The control circuit 61 controls the first sound source SG1 such that it reproduces the acceleration sound once. Otherwise, the reproduction of the acceleration sound may be interrupted in a first time, and the acceleration sound may be reproduced from the beginning to the end thereof in a last time. When the reproduction of the acceleration sound has been completed at the time t3, the control circuit 61 controls the third sound source SG3 such that it reproduces the high-speed reproduced sound data D3.

When the speed information changes from "20" to "31" at the time t4, the control circuit 61 detects the acceleration thereby a boundary of speed ranges has been encompassed onece has been executed. Then, the control circuit 61 controls the first sound source SG1 such that it interrupts the reproduction of the acceleration sound in a first time and reproduces the acceleration sound from the beginning to the end thereof in a last time, and when the reproduction of the acceleration sound has been completed at the time t5, the control circuit 61 controls the third sound source SG3 such that it reproduces the high-speed reproducing sound repeatedly.

When the speed information changes from "31" to "20" at the time t5, the control circuit 61 detects that deceleration that a boundary of speed ranges has been encompassed once based on the change of the speed information. Then, the control circuit 61 controls the second sound source SG2 such that it interrupts the reproduction of the deceleration sound in a first time and reproduces the deceleration sound from the beginning to the end thereof in a last time, and when the reproduction of the acceleration sound has been completed at a time t7, the control circuit 61 controls the forth sound source SG4 such that it reproduces the low-speed reproducing sound repeatedly.

### 2. Second embodiment

Next, a remote-controlled toy according to a second embodiment of the present invention will be explained. The remote-controlled toy according to the second embodiment is configured similarly to that of the first embodiment except a detailed constitution of the expansion unit 10.

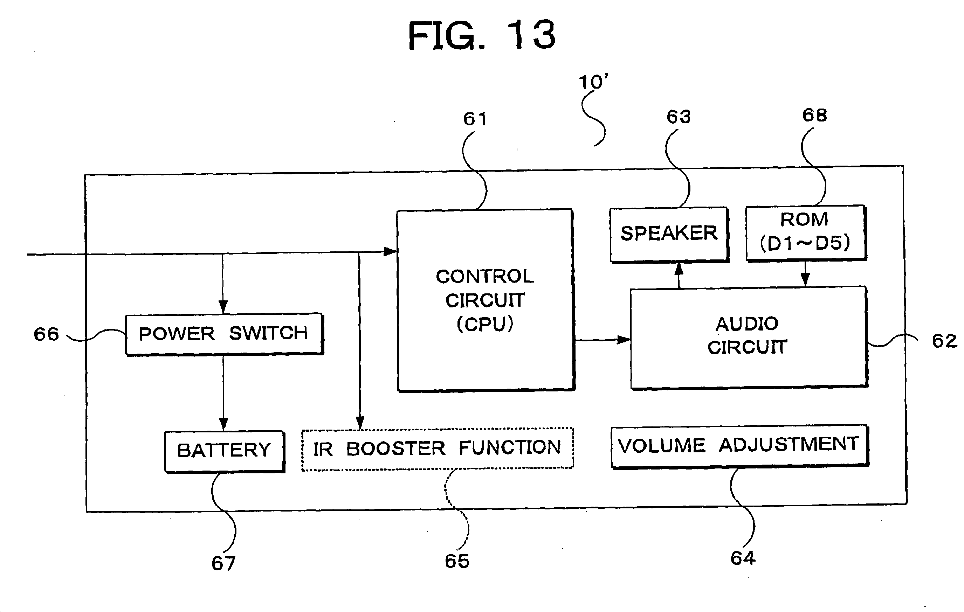

FIG. 13 shows a circuit constitution of an expansion unit 10' according to the second embodiment. The expansion unit 10 of the first embodiment described above has the first to fifth sound sources SG1-SG5 disposed in the audio circuit 62, and the respective sound data D1-D5 are created from the respective sound sources. Whereas, in the second embodiment, a plurality of types of sound data D1-D5 are stored in the predetermined memory regions of a single ROM 68 respectively. An audio circuit 62 reads out the sound data D1-D5 from the ROM 68 based on a control signal supplied from a control circuit 61. More specifically, the audio circuit 62 creates a read-out address signal for designating a memory region based on the control signal, appropriately reads out the sound data D1-D5 using the read-out address signal, and outputs an audio signal, which is obtained by D/A converting the sound data, to a speaker 63.

It is assumed that the idling sound data D5 is stored in a memory region designated by, for example, addresses ADR0-ADR255. In this case, when a control signal for designating an idling sound is supplied to the audio circuit 62, the audio circuit 62 creates address read-out signals for sequentially designating the addresses ADR0-ADR255. When a control signal indicates to reproduce the idling sound continuously after the address read-out signal for designating the address ADR255 has been created, the audio circuit 62 creates an address read-out signal so as to return to the address ADRO and read out the sound data D5 repeatedly.

Since the control signal is created according to a change of a driving state of the toy, the various types of the sound data D1-D5 can be appropriately combined in conformity with the change of the driving state of the toy by creating the address read-out signal based on the control signal. With the above constitution, it is possible to reproduce an effect sound abundant in variety, thereby the realism of a game can be enhanced. Note that when the single ROM 68 does not have a sufficient memory capacity, or when a plurality of types of sound data are reproduced at a time, a plurality of the ROMs 68 may be used. Although the ROM 68 is disposed externally of the audio circuit 62 in this example, it may be disposed in the audio circuit 62. Further, a single or a plurality of slots may be disposed to the expansion unit 10' acting as an sound apparatus, and the audio circuit 62 and the ROM 68 may compose a single sound card to be used by inserting into a slot. In this case, it is possible to easily change or add reproduction-possible sound data by replacing or adding a sound card.

It should be noted that the present invention is by no means limited to the above respective embodiment and may be embodied in various modes. For example, when a plurality of users each having a set of a vehicle 1 and a controller 2 gather and enjoy a race and the like, the sound apparatus may include a receiver to receive code signals transmitted from the controllers 2 of the respective users, convert the code signals into electric signals, and output resultant electric signals, the control circuit 61 of the expansion unit 10 described above, the audio circuit 62, and the speaker 63. Further, the speaker 63 may be disposed externally of the sound apparatus, and further the sound apparatus may directly output reproduced sound data.

As described above, according to the present invention, it is possible to reproduce an effect sound abundant in variety according to a driving state by combining various reproduced sounds wirh the simple constitution, thereby realism can be greatly enhanced.

## Claims

1. A sound apparatus to be used in a remote-controlled toy having a controller for outputting manipulation information according to a content manipulated by a user and a toy driven based on the manipulation information, the sound apparatus comprising:
a reproduction device for reproducing a plurality of types of sound data according to a driving state of the toy; and
a control device for analyzing a change of the driving state of the toybased on a change of the manipulation information, and controlling the reproduction device such that sound data can be created according to the change of the driving state of the toy based on a result of the analysis.

2. The sound apparatus according to claim 1, wherein the control device detects the change of the manipulation information by comparing past manipulation information with present manipulation information, and when an amount of the change is within a predetermined range, the control device maintains a controlled state of the reproduction device to create the sound data.

3. The sound apparatus according to claim 1 or 2, wherein the manipulation information includes speed information to express a speed;
the reproduction device can reproduce first sound data to express an acceleration sound and a second sound data to express a deceleration sound; and
the control device detects a change of the speed information obtained by comparing past speed information with present speed information as the change of the manipulation information, and when the present speed information is larger than the past speed information, the control device controls the reproduction device such that it reproduces the first sound data, and when the present speed information is less than the past speed information, the control device controls the reproduction device such that it reproduces the second sound data.

4. The sound apparatus according to claim 3, wherein when the control device detects that a boundary between predetermined speed ranges is encompassed while the past speed information changes to the present speed information, the control device controls the reproduction device such that it interrupts the reproduction of the first sound data or the second sound data and reproduces the first sound data or the second sound data from the beginning of it.

5. The sound apparatus according to claim 4, wherein a plurality of speed ranges to be complsed of the predetermined speed ranges are set within a range that can be covered by the speed information; and
the control device detects a number of times that a boundary between the predetermined speed ranges is encompassed while the past speed information changes to the present speed information and repeats processing for controlling the reproduction device such that it interrupts the reproduction of the first sound data or the second sound data and reproduces the first sound data or the second sound data from the beginning of it according to the detected number of times.

6. The sound apparatus according to claim 4 or 5, wherein
the reproduction device can reproduce third sound data to express a high-speed traveling sound and fourth sound data to express a low-speed traveling sound; and
the control device controls the reproduction device such that it reproduces the third sound data after the first sound data has been reproduced as well as controls the reproduction device such that it reproduces the fourth sound data after the second sound data has been reproduced.

7. The sound apparatus according to any one of claims 3 to 6, wherein
the reproduction device can reproduce fifth sound data to express a stop state sound, and
when the present speed information indicates the stop state of the toy, the control device controls the reproduction device such that it reproduces the fifth sound data.

8. The sound apparatus according to any one of claims 1 to 7, comprising:
an output device for outputting an audio signal based on the sound data; and
a speaker driven by the audio signal.
